# EUROPEAN PATENT APPLICATION

(11) **EP 1 278 386 A2**
(43) Date of publication of application: **22.01.2003**
(21) Application number: 02016207.9
(22) Date of filing: 18.07.2002
(51) Int. Cl.: H04Q 7/36

(54) **CDMA wireless system and interference wave suppressing method therein**

(30) Priority: 18.07.2001 JP 2001217424
(71) Applicant: NEC CORPORATION, Tokyo (JP)
(72) Inventor: Nakayasu, Kanada, Minato-ku, Tokyo (JP)
(74) Representative: VOSSIUS & PARTNER

(57) **Abstract**

A CDMA wireless system which exchanges a signal between a plurality of mobile stations and a wireless base station by a CDMA (Code Division Multiple Access) method includes first and second hierarchical cells, and a base station control device. The first and second hierarchical cells constitute hierarchical cover areas of the wireless base station and are different in only transmission/reception frequency. The base station control device preferentially hands over a mobile station having a low spread rate among the mobile stations to either one of the first and second hierarchical cells. An interference wave suppressing method in this system is also disclosed.

## Description

The present invention relates to a CDMA (Code Division Multiple Access) wireless system and an interference wave suppressing method of avoiding degradation in the quality of a mobile station near a base station in the system.

As a CDMA feature, a large transmission power supplied from a base station to a mobile station located at a distant place greatly interferes with reception at a mobile station relatively close to the base station, degrading the quality at the near mobile station. As a technique which avoids this problem, there is proposed transmission power control.

The transmission power technique increases/decreases a downlink transmission power from the base station so as to satisfy the SIR (Signal Interference Ratio) at the mobile station. If, however, the traffic increases at a given cell to increase the interference within the cell, all the mobile stations within the cell cannot satisfy the SIR, and transmission powers to all the mobile stations increases.

In the conventional transmission power control described above, an increase in transmission power simultaneously increases signal and interference components at a given mobile station, failing to improve the SIR. This further increases downlink transmission powers to respective mobile stations, and the power balance is lost. In this case, the quality of each mobile station excessively degrades, and communication stops in the worst case.

This phenomenon is considered to readily occur due to the coexistence of a mobile station with a large power and a mobile station with a small power within the same cell. To satisfy a specific reception quality when the spread rate is low (communication rate is high) at a mobile station, a larger transmission power is required in comparison with the case in which the spread rate is high (communication rate is low). In addition, a longer distance requires a larger transmission power.

More specifically, when a mobile station in communication at a position relatively close to a CDMA wireless base station device and a mobile station which is downloading an image at a high rate by, e.g., IP (Internet Protocol) packets exist near the boundary of cells in the CDMA wireless base station device, the relative difference becomes large between a downlink transmission power to the mobile station close to the CDMA wireless base station device and a downlink transmission power to the IP packet mobile station apart from the CDMA wireless base station device. The CN (Carrier to Noise) of a signal received by the mobile station close to the CDMA wireless base station device decreases, degrading the quality of a downlink radio signal. The mobile station in this state requests the CDMA wireless base station device to increase the downlink transmission power in order to compensate for the degradation of the quality.

A plurality of mobile stations close to the CDMA wireless base station device simultaneously request the device to increase downlink transmission powers under the influence of a high-rate IP packet mobile station apart from the CDMA wireless base station device. The high-rate IP packet mobile station also requests the CDMA wireless base station device to increase a downlink transmission power in order to maintain the reception quality. In the worst case, the power within the cell is unbalanced, and some speech communication processes or data transmission processes are interrupted, extremely degrading the communication quality.

Hence, demands have arisen for suppressing the degradation of the reception quality of a mobile station within a given cell and the power unbalance within the cell caused by the interference of a mobile station which requires a large power due to a long distance, a high transmission rate (low spread rate), or the like.

It is an object of the present invention to provide a CDMA wireless system capable of stabilizing the power balance within a cell and an interference wave suppressing method in the system.

To achieve the above object, according to the present invention, there is provided a CDMA wireless system which exchanges a signal between a plurality of mobile stations and a wireless base station by a CDMA (Code Division Multiple Access) method, comprising first and second hierarchical cells which constitute hierarchical cover areas of the wireless base station and are different in only transmission/reception frequency, and base station control means for preferentially handing over a mobile station having a low spread rate among the mobile stations to either one of the first and second hierarchical cells.

The present invention will be described in detail below with reference to the accompanying drawings.
Fig. 1 is a block diagram showing a CDMA wireless system according to the first embodiment of the present invention;
Fig. 2 is a graph showing a temporal change in the transmission power of each mobile station in a CDMA wireless base station device shown in Fig. 1;
Fig. 3 is a flow chart showing the operation of the CDMA wireless system according to the first embodiment;
Fig. 4 is a flow chart showing the operation of a CDMA wireless system according to the second embodiment of the present invention;
Fig. 5 is a flow chart showing the operation of a CDMA wireless system according to the third embodiment of the present invention; and
Fig. 6 is a block diagram showing the CDMA wireless base station device shown in Fig. 1.

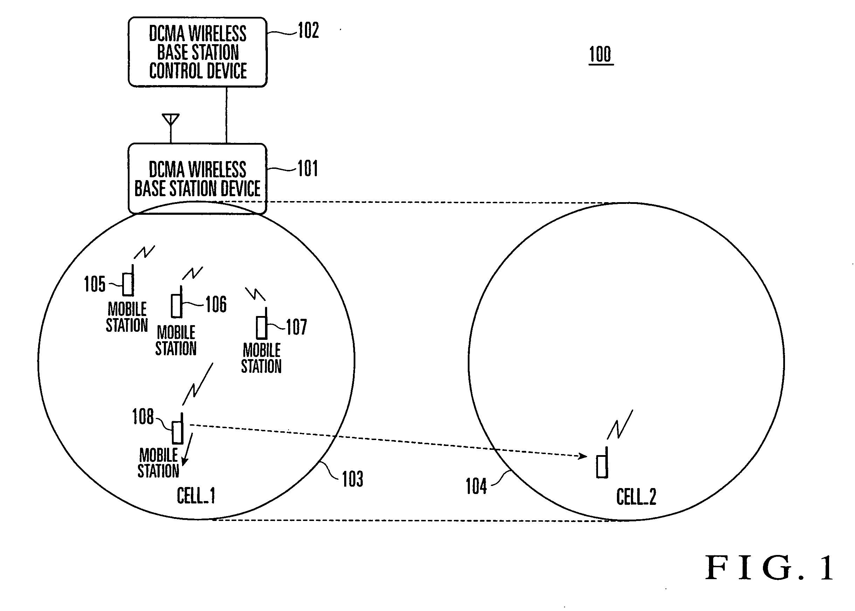

Fig. 1 shows a CDMA wireless system according to the first embodiment of the present invention. In Fig. 1, a CDMA wireless base station system 100 comprises a CDMA wireless base station device 101, a CDMA wireless base station control device (base station control means) 102 connected to the CDMA wireless base station device 101, a cell (Cell_1) 103 and cell (Cell_2) 104 which receive services from the CDMA wireless base station device 101, and CDMA mobile stations 105 to 108 which move within the cells 103 and 104.

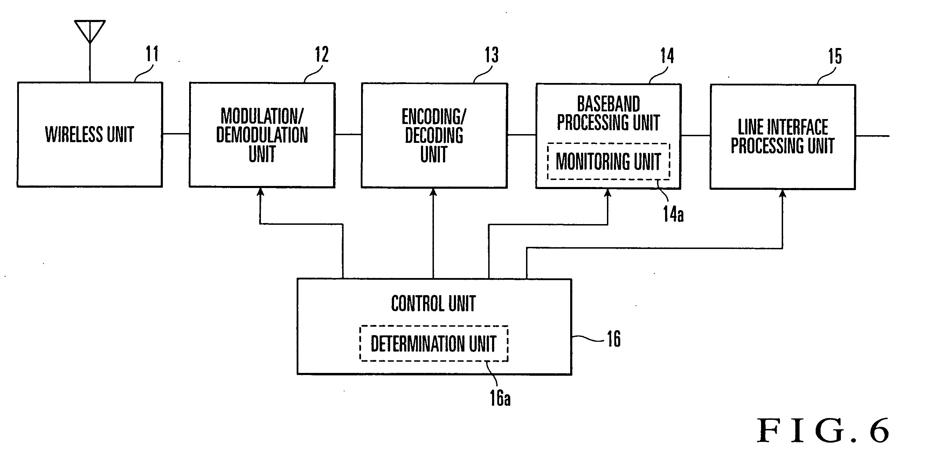

As shown in Fig. 6, the CDMA wireless base station device 101 comprises a wireless unit 11 which exchanges radio signals via an antenna, a modulation/demodulation unit 12 which modulates/demodulates a spread code, an encoding/decoding unit 13 which performs error correction encoding/decoding processing, a baseband processing unit 14 which performs baseband processing of transmission power control, an interface processing unit 15 which performs interface processing with a line, and a control unit 16 which determines a mobile station to be handed over and controls the entire wireless base station. The cells 103 and 104 constitute hierarchical cells having antenna beams which are emitted by the same antenna of the CDMA wireless base station device 101 and cover areas in the same direction, and having different transmission/reception frequencies.

One CDMA wireless base station control device 102 is installed for a plurality of CDMA wireless base station devices 101, and executes wireless resource management including handover control for the CDMA wireless base station devices 101 managed by the control device 102. The mobile stations 105 to 107 are located within the cells 103 and 104, and perform communication relatively close to the CDMA wireless base station device 101. The mobile station 108 is moving toward the boundary from the center of the cell 103, and downloads a downlink image or the like at a high rate by IP packets.

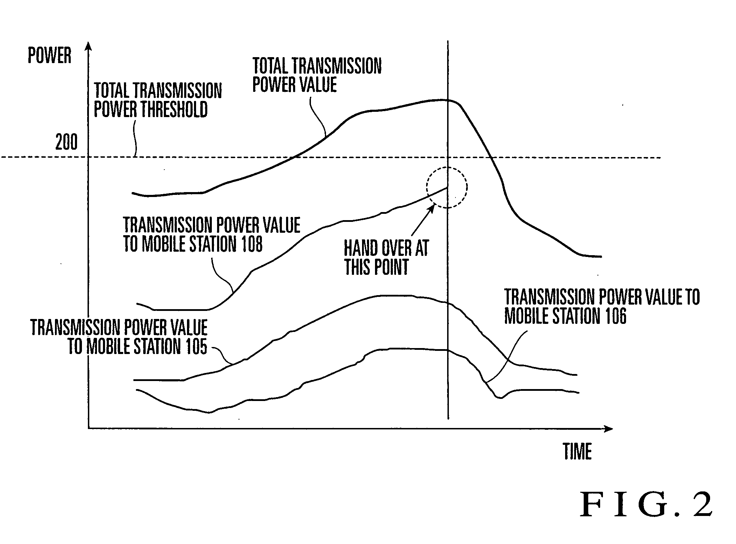

Fig. 2 shows an example of a temporal change in transmission power from the CDMA wireless base station device 101 to the mobile stations 105, 106, and 108 in a situation as shown in Fig. 1. In Fig. 2, the total transmission power threshold to all the mobile stations in this cell is 200.

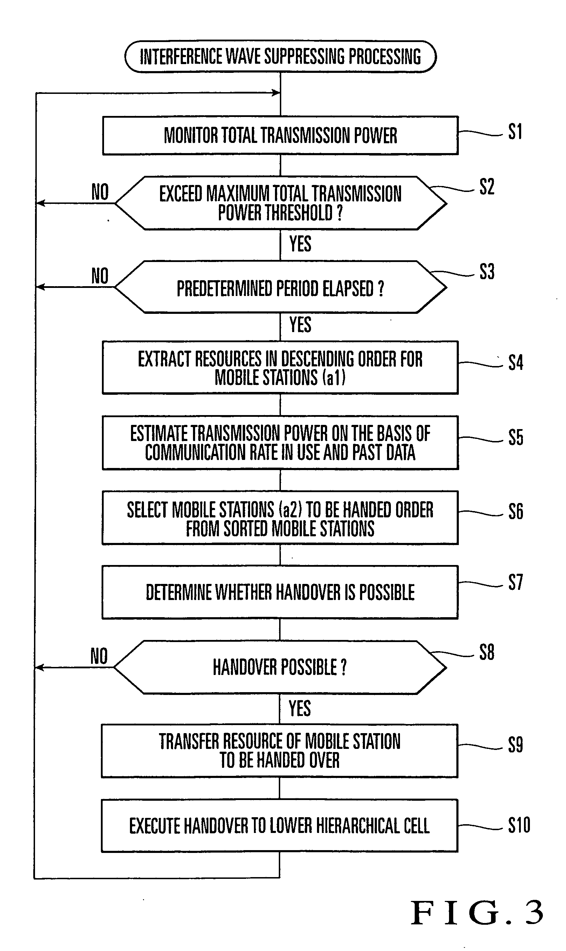

Processing when the transmission power exceeds the total transmission power threshold of 200 will be explained with reference to Fig. 3.

In the CDMA wireless base station device 101, a monitoring unit 14a of the baseband processing unit 14 calculates and monitors a total transmission power in a given cell (step S1). A determination unit 16a of the control unit 16 determines whether the total transmission power output from the monitoring unit 14a continuously exceeds the maximum total transmission power threshold of 200 for a predetermined time or more (steps S2 and S3). If "YES" in step S2 or S3, the control unit 16 sequentially extracts, in a descending order for mobile stations (a1), resources which transmit data to the mobile stations with the largest power within the cell (step S4).

For the extracted mobile stations (a1), the control unit 16 estimates a transmission power (whether each mobile station moves close or apart) on the basis of the communication rate in use and past data (step S5). The control unit 16 sorts mobile stations sequentially from a mobile station which has a high communication rate and moves apart, and selects mobile stations (a2) to be actually handed over between frequencies from the sorted mobile stations (step S6).

The control unit 16 determines whether handover is possible from information such as the total transmission power of a lower hierarchical cell serving as a handover destination and an uplink interference amount (step S7). If the status of the lower hierarchical cell permits handover ("YES" in step S8), the control unit 16 transfers the resource of a mobile station to be handed over to the CDMA wireless base station control device 102 (step S9). The CDMA wireless base station control device 102 receives the resource information of the mobile station to be handed over from the CDMA wireless base station device 101, and executes handover of the mobile station to the lower hierarchical cell by using a protocol with the mobile station (step S10). If "NO" in step S2, S3, or S8, the flow returns to step S1.

The first embodiment forcibly moves a large-transmission-power mobile station in a given cell to a lower hierarchical cell in response to, as a trigger, an excess of the total transmission power of the cell over a preset threshold. Consequently, upper cells in the hierarchy of hierarchical cells are used as small- to intermediate-power cells, and lower cells are used as large-power cells. The relative power difference between mobile stations within one cell decreases to stabilize the power balance within the cell. The influence of a mobile station requiring a large transmission power on other mobile stations within the cell can be reduced, thus stabilizing the communication quality within the cell.

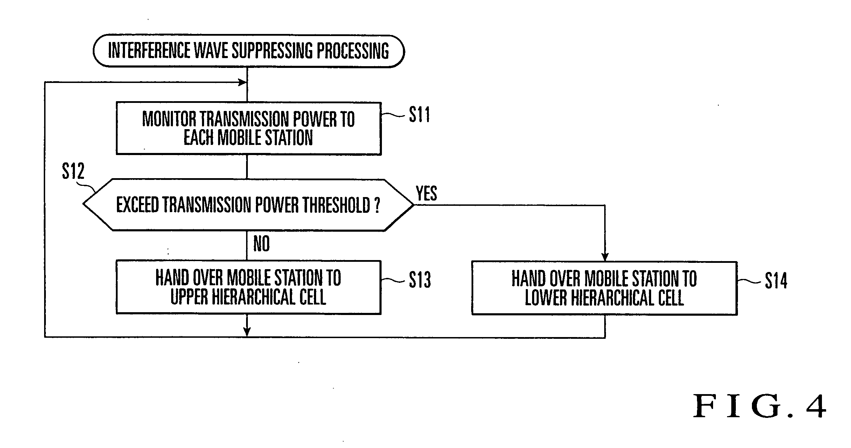

The operation of a CDMA wireless system according to the second embodiment of the present invention will be described with reference to Fig. 4. The arrangement of the CDMA wireless system according to the second embodiment is the same as that of the CDMA wireless system according to the first embodiment shown in Fig. 1.

The above-described first embodiment moves a large-transmission-power resource to a lower hierarchical cell when the traffic of a given cell rises and exceeds the threshold. To the contrary, the second embodiment executes the following operation instead of performing processing after the traffic rises.

In a CDMA wireless base station device 101, a monitoring unit 14a monitors a transmission power to each mobile station in a normal state (step S11). A determination unit 16a determines whether the transmission power to each mobile station exceeds the threshold. If the transmission power does not exceed the threshold, a control unit 16 hands over the mobile station to an upper hierarchical cell (step S13). If the transmission power exceeds the threshold of the transmission power value, the control unit 16 hands over the mobile station to a lower hierarchical cell (step S14). The CDMA wireless base station control device 102 executes resource management in accordance with the handover result.

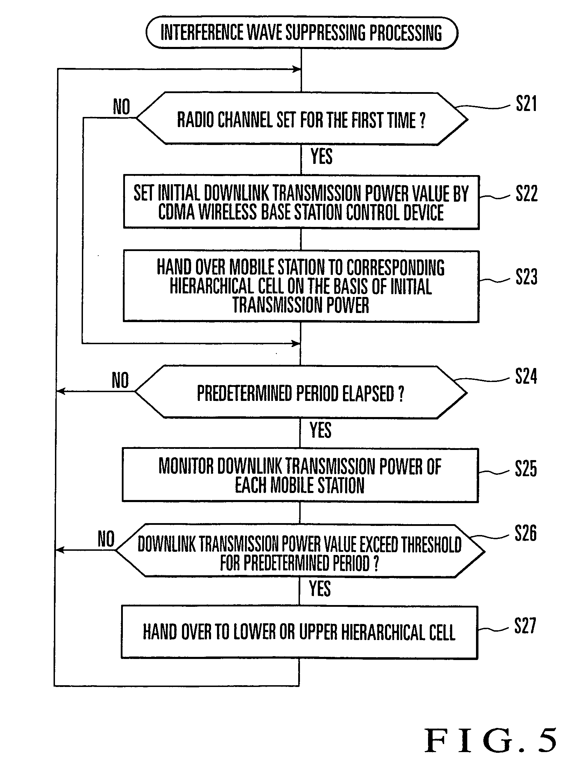

The operation of a CDMA wireless system according to the third embodiment of the present invention will be described with reference to Fig. 5. The arrangement of the CDMA wireless system according to the third embodiment is the same as that of the CDMA wireless system according to the first embodiment shown in Fig. 1.

Whether a radio channel is set between a mobile station and a CDMA wireless base station device 101 for the first time is checked (step S21). If "YES" in step S21, a CDMA wireless base station control device 102 sets the initial downlink transmission power value of the CDMA wireless base station device 101 (step S22). That is, when the mobile station transmits the first channel setting request message, the CDMA wireless base station control device 102 determines an initial transmission power value by calculation based on the quality of a pilot channel always transmitted by the CDMA wireless base station device 101.

Each hierarchical cell has a limited transmission power range. By determining which of the transmission power ranges of hierarchical cells corresponds to the initial transmission power value determined by calculation, the mobile station is handed over to the hierarchical cell at the beginning of the channel setting (step S23).

While the radio channel is set, a monitoring unit 14a always monitors the downlink transmission power of each mobile station in a predetermined cycle (steps S24 and S25). Using an output from the monitoring unit 14a, a determination unit 16a determines whether a downlink transmission power to a given mobile station exceeds the threshold for a predetermined period regardless of the total transmission power of the cell (step S26). If "YES" in step S26, the determination unit 16a hands over the mobile station to a lower or upper hierarchical cell (step S27).

If "NO" in step S24 or S26, the flow returns to step S21. If "NO" in step S21, the flow skips steps S22 and S23 and jumps to step S24.

As has been described above, according to the present invention, a mobile station requiring a large transmission power which unbalances the power within a cell is detected, and the downlink transmission power of each resource within the cell is monitored in a predetermined cycle. If the downlink transmission power exceeds the threshold, the mobile station is handed over from the current cell to a lower hierarchical cell. Accordingly, power unbalance within a cell can be prevented, and the degradation of the quality of a downlink radio signal in a mobile station can be suppressed.

Since a mobile station with a low spread rate (high communication rate) is preferentially handed over to a lower hierarchical cell, the power balance within a cell can be stabilized. The influence of a mobile station requiring a large transmission power on other mobile stations within the cell can be reduced, thus stabilizing the communication quality within the cell.

## Claims

1. A CDMA wireless system which exchanges a signal between a plurality of mobile stations (105 - 108) and a wireless base station (101) by a CDMA (Code Division Multiple Access) method, **characterized by** comprising:
first and second hierarchical cells (103, 104) which constitute hierarchical cover areas of the wireless base station and are different in only transmission/reception frequency; and
base station control means (102) for preferentially handing over a mobile station having a low spread rate among the mobile stations to either one of the first and second hierarchical cells.

2. A system according to claim 1, wherein one of the first and second hierarchical cells is used as a large-power cell, and the other one of the first and second hierarchical cells is used as a small- to intermediate-power cell.

3. A system according to claim 1 or 2, wherein said base station control means hands over the mobile station having the low spread code to either one of the first and second hierarchical cells on the basis of a monitoring result of a downlink transmission power of each resource within a cell.

4. A system according to claim 3, wherein
the CDMA wireless system further comprises
monitoring means (14a) for monitoring a downlink transmission power of each resource within a cell in a predetermined cycle, and
determination means (16a) for determining whether the downlink transmission power output from said monitoring means exceeds a preset threshold, and
said base station control means hands over a mobile station which targets a downlink transmission power to a lower one of the first and second hierarchical cells when a determination result of said determination means represents that the downlink transmission power exceeds the preset threshold.

5. A system according to claim 1 or 2, wherein said base station control means hands over the mobile station having the low spread code to either one of the first and second hierarchical cells on the basis of a monitoring result of a total transmission power within a cell.

6. A system according to claim 5, wherein
the CDMA wireless system further comprises
monitoring means (14a) for monitoring a total transmission power within a cell, and
determination means (16a) for determining whether the total transmission power output from said monitoring means exceeds a preset threshold, and
said base station control means hands over a mobile station which targets a downlink transmission power to a lower one of the first and second hierarchical cells when a determination result of said determination means represents that the total transmission power exceeds the preset threshold.

7. A system according to any one of claims 1 to 6, further comprising:
monitoring means (14a) for monitoring a transmission power to each mobile station in a normal state; and
control means (16) for handing over a corresponding mobile station to either one of the first and second hierarchical cells on the basis of a monitoring result of said monitoring means.

8. A system according to any one of claims 1 to 7,further comprising control means (16) for handing over the mobile station to either one of the first and second hierarchical cells in accordance with a set initial downlink transmission power value when a radio channel is connected between the mobile station and the wireless base station for the first time.

9. A system according to claim 8, wherein the first and second hierarchical cells individually have limited transmission power ranges.

10. An interference wave suppressing method in a CDMA wireless system which exchanges a signal between mobile stations (105 - 108) and a wireless base station (101) by a CDMA (Code Division Multiple Access) method, **characterized by** comprising the steps of:
setting first and second hierarchical cells (103, 104) which constitute hierarchical cover areas of the wireless base station and are different in only transmission/reception frequency; and
preferentially handing over a mobile station having a low spread rate to either one of the first and second hierarchical cells.

11. A method according to claim 10, wherein one of the first and second hierarchical cells is used as a large-power cell, and the other one of the first and second hierarchical cells is used as a small- to intermediate-power cell.

12. A method according to claim 10 or 11, wherein the handing-over step comprises the steps of
monitoring a downlink transmission power of each resource within a cell in a predetermined cycle,
determining whether the downlink transmission power exceeds a preset threshold, and
when the downlink transmission power exceeds the threshold, handing over a mobile station which targets a downlink transmission power to either one of the first and second hierarchical cells.

13. A method according to claim 10 or 11, wherein the handing-over step comprises the steps of
monitoring a total transmission power within a cell,
determining whether the total transmission power exceeds a preset threshold, and
when the total transmission power exceeds the threshold, handing over a mobile station which targets a downlink transmission power to either one of the first and second hierarchical cells.

14. A method according to claim 10, 11, 12 or 13, further comprising the steps of
monitoring a transmission power to the mobile station in a normal state, and
handing over the mobile station to either one of the first and second hierarchical cells on the basis of a monitoring result.

15. A method according to claim 10, 11, 12, 13 or 14, further comprising the steps of
setting an initial downlink transmission power value when a radio channel is connected between the mobile station and the wireless base station for the first time, and
handing over the mobile station to either one of the first and second hierarchical cells in accordance with the set initial downlink transmission power value.

16. A method according to any one of claims 10 to 15, wherein the first and second hierarchical cells individually have limited transmission power ranges.
